# EUROPEAN PATENT APPLICATION

(11) **EP 1 892 026 A2**
(43) Date of publication of application: **27.02.2008**
(21) Application number: 07253288.0
(22) Date of filing: 21.08.2007
(51) Int. Cl.: B01D 21/00, E03F 5/04

(54) **Apparatus for treating water**

(30) Priority: 21.08.2006 GB 0616570
(71) Applicant: Polypipe Civils Limited, Loughborough, Leicestershire LE11 ORE (GB)
(72) Inventor: Brown,David, Castle Donington DE74 NZ Derbyshire (GB)
(74) Representative: Oxley, Robin John George

(57) **Abstract**

Apparatus (1) for filtering debris from a flow of water, comprising a main chamber (2) and a filter chamber (3) arranged to received water to be filtered from the main chamber (2) and to direct filtered water to an outlet (4) from the main chamber (2).

## Description

The invention relates to apparatus for treating water, particularly for filtering debris from a flow of water.

Water in flash or storm water conditions often contains debris such as leaves, twigs, grit and the like which can block conventional treatment systems, and for preference has to be removed for subsequent handling of the water. Presently, there are systems such as screens in a water flow path, but these soon clog and cause water to back up and overflow whilst preventing further screening.

It is an object of the invention to seek to mitigate these disadvantages.

According to a first aspect of the invention, there is provided apparatus for filtering debris from a flow of water, comprising a main chamber and a filter chamber arranged to receive water to be filtered from the main chamber and to direct filtered water to an outlet from the main chamber.

Using the invention it is possible to remove up to 90% of entrained debris, which removed debris passes out of the apparatus, so that there is no blocking of the apparatus.

The filter chamber may be mounted interiorly of the main chamber. This provides a compact structure which has a relatively small "footprint".

The filter chamber may comprise a through passage for water and, associated with the passage, a filter device for filtering debris from the flow of water. This provides an efficient apparatus, particularly as the debris passes on through the passage.

The filter device may be intermediate the length of the passage. This again is an efficient construction.

The filter chamber may be defined by walls which may be substantially parallel and extend across the main chamber to provide main chamber parts exteriorly of each wall, the passage extending from one wall to the other, there being in the walls respective orifices aligned with opposite ends of the passage to provide a respective inlet and outlet for the water from the chamber parts.

The walls may have a height less than the height of the main chamber.

The filter chamber may be open at an upper, in use, end and the walls may provide an overflow means.

The overflow means may comprise a gulley at an upper part of the walls.

The gulley may communicate with a main chamber part which is a downstream part having an outlet for overflow water from the gulley, and from the passage.

There may be a plurality of said through passages.

The said passages may be substantially parallel.

There may be two, four or six said passages.

The or each filter device may comprise a trap in the passage having an axis inclined to the axis of the passage whereby the inlet of the or each passage is higher in use than the outlet of the or each passage.

The or each trap may have an outlet through which filtered water is adapted to debouch into the filter chamber.

The main chamber may be substantially cylindrical.

The main chamber may have an inlet for water which is higher in use than the outlet for filtered water.

According to a second aspect of the invention there is provided a water handling system including apparatus as hereinbefore defined.

Apparatus for filtering debris from a flow of water, which apparatus is part of a water handling system, is hereinafter described, by way of example, with reference to the following schematic drawings.

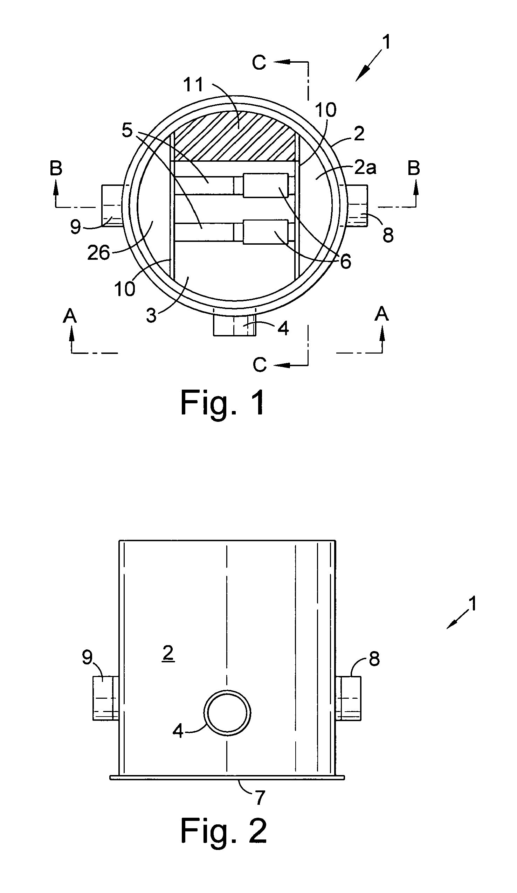

- Fig. 1: is a plan view of one embodiment of apparatus according to the invention;
- Fig. 2: is an elevational view on the line of arrows A - A of Fig. 1;
- Fig. 3: is a section on line B - B of Fig. 1; and
- Fig. 4: is a section on line C - C of Fig. 1.

Referring to the drawings there is shown an embodiment of apparatus 1 for filtering debris from a flow of water, comprising a main chamber 2 and a filter chamber 3 arranged to receive water to be filtered from the main chamber 1 and to direct filtered water to an outlet 4 from the main chamber 2.

The filter chamber 2 comprises a through passage 5 for water and associated with the passage, by being incorporated therein, there is a filter device 6 for filtering debris from the water. In the embodiment shown, there are two through passages 5 each with its associated filter device 6, but there could be one such through passage, or other multiple arrangements thereof for example four or six (not shown). Where, as in the embodiment shown, there are two passages 5, they are substantially parallel one with the other.

The main chamber 2 is formed in the embodiment from a cylindrical tube, which can have a double walled corrugated profile boundary. One end is closed by a polymer sheet 7 which is welded to the tube at one end to form a base on which the chamber 2 rests in use, the plate 7 extending laterally of the boundary wall of the tube to provide against tipping or tilting of the apparatus 1.

An inlet 8 for flow of water to be filtered is provided by a short plastic tube penetrating the boundary wall, and welded thereto. Likewise, the outlet 4 for filtered water is in the form of a short plastic tube penetrating the wall of main chamber 2 with an axis at 90° to the axis of the inlet 8.

There is also a drain outlet 9 in the wall of the main chamber 2 provided by a short plastic tube which penetrates that wall, its invert level, i.e. base being below that of the inlet 8 and substantially parallel thereto. The invert level of the storage outlet 4 is below that of the drain outlet 9 and as seen, its axis is also at 90° to the axis of the drain outlet 9.

The filter chamber 3 is positioned interiorly of the main chamber 2 and is defined by two spaced planar walls or headwalls 10 which extend across arcs of the cylinder forming the main chamber 2 and are welded at each end to the interior boundary wall of the main chamber 2 and to the base 7. The walls 10 are thus substantially upright, and substantially parallel to define and open interior filter chamber 3. The upper edge of the walls is stepped to define a gulley 11 or overflow channel which curves round the filter chamber 3 to communicate with a main chamber part 2b which leads to the drain outlet 9, there being an upstream main chamber part 2a to which water to be filtered flows through the inlet 8.

The filter element 6 is inclined to the axis of the respective passage 5 in which it is mounted so that there is a fall from inlets 12 thereto to outlets therefrom to the downstream main chamber part 2b leading to the drain outlet 9. Each filter device 6 has a downwardly (as viewed) outlet 13 from which water substantially clean of debris, debouches into the filter chamber 3.

In use, water including debris such as leaves, twigs, grit enters the main chamber part 2a through the inlet 8. When the water level rises to the level of the inlets 12 to the passages 5, it flows therethrough to the filter devices 6 where up to 90% of the debris is removed. Filtered water debouches into the filter chamber 3 through the outlets 13.

When the filtered water reaches the level of the storage outlet 4, it flows therethrough to storage (not shown) for future use. The water with remaining debris (about 10%) passes from the filter device 6 along the passages 5 to exit into the downstream main chamber parts 2b and thence out of the apparatus 1 via the drain outlet 9 when the level rises sufficiently.

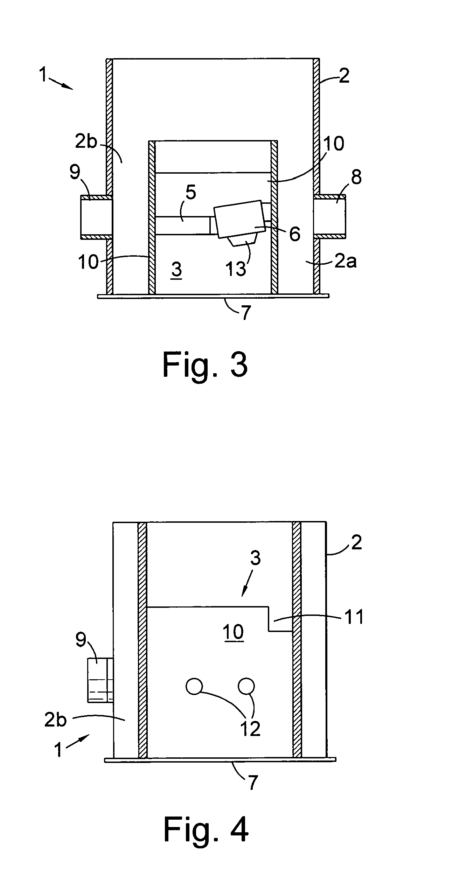

Should there be a back up of water to be filtered, it does not enter the filter chamber 3 because it passes via the gulley 11 round the filter chamber to the downstream main chamber part 2b and then out of the drain outlet 9. Thus water containing debris does not pass to the outlet 4 as the bottom of the gulley 11 (Fig. 4) is lower than the level of the top of the plates 10, so water does not overflow into the filter chamber 3, and hence cannot exit to storage via the outlet 4.

The apparatus 1 shown typically has a height of 1525mm and a diameter of 1200mm. Where there are four or six passages, the height will remain the same but the diameter will increase to 1350mm and 1800mm respectively.

With every embodiment, it is possible to remove debris to a size of 440 microns.

## Claims

1. Apparatus for filtering debris from a flow of water, comprising a main chamber and a filter chamber arranged to receive water to be filtered from the main chamber and to direct filtered water to an outlet from the main chamber.

2. Apparatus according to Claim 1, the filter chamber being mounted interiorly of the main chamber.

3. Apparatus according to Claim 2, the filter chamber comprising a through passage for water and, associated with the passage, a filter device for filtering debris from the flow of water.

4. Apparatus according to Claim 3, the filter device being intermediate the length of the passage.

5. Apparatus according to Claim 4, the filter chamber being defined by walls which are substantially parallel and extend across the main chamber to provide main chamber parts exteriorly of each wall, the passage extending from one wall to the other, there being in the walls respective orifices aligned with opposite ends of the passage to provide a respective inlet and outlet for the water from the chamber parts.

6. Apparatus according to Claim 5, the walls having a height less than the height of the main chamber.

7. Apparatus according to Claim 6, the filter chamber being open at an upper, in use, end, and the walls providing an overflow means.

8. Apparatus according to Claim 7, the overflow means comprising a gulley at an upper part of the walls.

9. Apparatus according to Claim 8, the gulley communicating with a main chamber part which is a downstream part having an outlet for overflow water from the gulley, and from the passage.

10. Apparatus according to any of Claims 3 to 9, there being a plurality of said through passages.

11. Apparatus according to Claim 10, the said passages being substantially parallel.

12. Apparatus according to Claim 10 or Claim 11, there being two said passages.

13. Apparatus according to Claim 10 or Claim 11, there being four said passages.

14. Apparatus according to Claim 10 or Claim 11, there being six said passages.

15. Apparatus according to any of Claims 3 to 14, the or each filter device comprising a trap in the passage having an axis inclined to the axis of the passage whereby the inlet of the or each passage is higher in use than the outlet of the or each passage.

16. Apparatus according to Claim 15, the or each trap having an outlet through which filtered water is adapted to debouch into the filter chamber.

17. Apparatus according to any preceding claim, the main chamber being substantially cylindrical.

18. Apparatus according to any preceding claim, the main chamber having an inlet for water which is higher in use than the outlet for filtered water.

19. A water handling system, including apparatus according to any preceding claim.
